# EUROPÄISCHE PATENTSCHRIFT

(11) **EP 1 585 993 B1**
(45) Veröffentlichungstag und Bekanntmachung des Hinweises auf die Patenterteilung: **25.04.2007**
(21) Anmeldenummer: 04789940.6
(22) Anmeldetag: 08.10.2004
(51) Int. Cl.: G01S 13/93, G01S 7/02, B60R 21/01

(54) **VORRICHTUNG UND VERFAHREN ZUR OBJEKTERKENNUNG FÜR EINE KRAFTFAHRZEUG-SICHERHEITSEINRICHTUNG**
DEVICE AND METHOD FOR OBJECT RECOGNITION FOR AN AUTOMOTIVE SAFETY DEVICE
PROCEDE ET DISPOSITIF DE RECONNAISSANCE D'OBJET POUR UN DISPOSITIF DE SECURITE DE VEHICULE A MOTEUR

(30) Priorität: 13.11.2003 DE 10353001
(43) Veröffentlichungstag der Anmeldung: 19.10.2005
(73) Patentinhaber: Conti Temic microelectronic GmbH, 90411 Nürnberg (DE)
(72) Erfinder: BAUER, Hermann, 89518 Heidenheim (DE); FENDT, Günter, 86529 Schrobenhausen (DE); BÄRENWEILER, Josef, 90513 Zirndorf (DE); STEURER, Helmut, 85302 Junkenhofen (DE); KÜBLBECK, Hermann, 86529 Schrobenhausen (DE)
(86) Internationale Anmeldenummer: PCT/DE2004/002231
(87) Internationale Veröffentlichungsnummer: WO 2005/047929

(56) Entgegenhaltungen:
- WO-A1-98/29761
- DE-A1- 2 124 474
- DE-A1- 2 500 120
- DE-A1- 3 100 224
- DE-A1- 4 200 299

## Beschreibung

Die Erfindung betrifft eine Vorrichtung zur Objekterkennung für eine Kraftfahrzeug-Sicherheitseinrichtung nach Anspruch 1 und ein entsprechendes Verfahren nach Anspruch 14.

In der Automobiltechnik gewinnen Systeme zur aktiven Fahrunterstützung immer mehr an Bedeutung. Um das Sicherheitsniveau weiter zu verbessern, werden mittlerweile verstärkt "vorausschauende" Sicherheitssysteme eingesetzt, d.h. Systeme, die optisch die Fahrzeugumgebung erfassen und die dadurch gewonnenen Daten und Informationen in Sicherheitskonzepte einfließen lassen.

Derzeit sind vor allem sogenannte cV (closing velocity)-Sensoren in Erprobung. Derartige cV-Sensoren dienen zum Erfassen einer Delta-Geschwindigkeit zwischen einem Kraftfahrzeug und einem Hindernis und arbeiten auf Basis von Laser- bzw. Radarstrahlen. Zum Ermitteln der Delta-Geschwindigkeit wird die "Delta-Laufzeit" von ausgesendeten Signalen bis zum Empfang der am zu messenden Objekt oder Hindernis reflektierten Signale gemessen.

Dieses Verfahren besitzt allerdings den Nachteil, dass es für die Sicherheit nur begrenzt aussagekräftige Daten und Informationen generieren kann. Die einzigen unmittelbar erzeugten Informationen sind die relative Differenzgeschwindigkeit eines Gegenstands oder eines Hindernisses sowie deren Abstand zum Sensor. Weitere Informationen über das Hindernis, wie beispielsweise die Beschaffenheit des Objekts (z.B. Karton oder Fahrzeug) werden durch dieses Verfahren nicht erhalten. Nur die Geschwindigkeit des Hindernisses kann mittelbar anhand der Eigengeschwindigkeit des cV-Sensors ermittelt werden.

Da insbesondere Informationen über die Beschaffenheit und Masse des Hindernisses für den Verlauf eines möglichen Zusammenstoßes eines Kraftfahrzeugs mit dem Hindernis eine wichtige Rolle spielen, wäre die Ermittlung und Einbindung dieser Informationen in die Entscheidungsabläufe eines Sicherheitskonzeptes im Kraftfahrzeug von großem Nutzen.

Aus der gattungsbildenden DE 2124474 A1 ist eine Fahrzeug-Detektorvorrichtung zu entnehmen, bei der eine elektromagnetische Welle erster Polarisierung ausgesendet und mittels eines Polarisationsfilters am Empfänger nur Wellen einer definierter Polarisierung ausgewertet werden.

Aufgabe der vorliegenden Erfindung ist es daher, eine Vorrichtung und ein Verfahren zur Objekterkennung für eine Kraftfahrzeug-Sicherheitseinrichtung vorzuschlagen, welche zumindest eine weitere Information zusätzlich zur Relativgeschwindigkeit erzeugen, die vom Kraftfahrzeug-Sicherheitssystem vorteilhaft ausgewertet werden kann.

Diese Aufgabe wird durch eine Vorrichtung und ein Verfahren zur Objekterkennung für eine Kraftfahrzeug-Sicherheitseinrichtung mit den Merkmalen nach Anspruch 1 bzw. 13 gelöst. Weitergehende Ausgestaltungen der Erfindung ergeben sich aus den abhängigen Ansprüchen.

Ein wesentlicher Gedanke der Erfindung basiert auf der Auswertung der Polarisation einer an einem Hindernis reflektierten elektromagnetischen Welle, wie beispielsweise eines Laserstrahls. Die Polarisation ermöglicht es, Information über die Art des Hindernisses, insbesondere über dessen Oberflächenstruktur zu gewinnen. Dies beruht auf der Erkenntnis, dass eine polarisierte elektromagnetische Welle wie beispielsweise Laserlicht an unterschiedlichen Materialien mit unterschiedlichen Drehwinkeln hinsichtlich der Polarisationsebene reflektiert wird, also darauf, dass der Drehwinkel der Polarisation bei einer Reflexion materialabhängig ist. Diese Drehung der Polarisationsebene des vom Aufzeichnungsmaterial reflektierten Laserlichts kann mit Hilfe geeigneter optischer und elektronischer Geräte gemessen und in entsprechende Signale umgewandelt werden.

Die Erfindung betrifft nun eine Vorrichtung zur Objekterkennung für ein Kraftfahrzeug-Insassenschutzsystem mit einer Signalquelle, die zum Erzeugen mindestens einer elektromagnetischen Welle ausgebildet ist, und einem Empfänger für die von einem Hindernis reflektierte mindestens eine elektromagnetische Welle. Erfindungsgemäss ist eine Auswerteeinheit vorgesehen, die zum Auswerten der Polarisation der vom Hindernis reflektierten und vom Empfänger empfangenen mindestens einen elektromagnetischen Welle und zum Erzeugen mindestens eines Auswertesignals ausgebildet ist. Das derart erzeugte mindestens eine Auswertesignal kann als Freigabe- oder Informationssignal für eine Sicherheitseinrichtung des Kraftfahrzeug-Insassenschutzsystems eingesetzt werden.
Die Auswerteeinheit ist ausgebildet, um den Drehwinkel der Polarisation zwischen der vom Hindernis reflektierten und vom Empfänger empfangenen und der gesendeten mindestens einen elektromagnetischen Welle festzustellen.

Alternativ oder zusätzlich kann die Auswerteeinheit ausgebildet sein, um die Polarisationsart der vom Hindernis reflektierten und vom Empfänger empfangenen mindestens einen elektromagnetischen Welle festzustellen.

Um die Genauigkeit der Auswertung weiter zu verbessern, kann die Auswerteeinheit ausgebildet sein, um die Wellenlänge der vom Hindernis reflektierten und vom Empfänger empfangenen mindestens einen elektromagnetischen Welle festzustellen.

Für eine besonders genaue Auswertung kann die Signalquelle ausgebildet sein, um die Polarisation, insbesondere den Polarisationswinkel, die Polarisationsebene und/oder die Polarisationsart der erzeugten mindestens einen elektromagnetischen Welle zu verändern, insbesondere mindestens zwei unterschiedlich polarisierte elektromagnetische Wellen (12) zu erzeugen.

Ferner kann die Signalquelle ausgebildet sein, um die Wellenlänge der erzeugten mindestens einen elektromagnetischen Welle zu verändern, insbesondere mindestens zwei elektromagnetische Wellen (12) mit unterschiedlichen Wellenlängen zu erzeugen.

Die Auswerteeinheit ist ausgebildet, um anhand des Polarisationswinkels, insbesondere der Polarisationsebene und/oder der Polarisationsart und/oder Wellenlänge eine Oberflächenstruktur des Hindernisses festzustellen, insbesondere die Polarisationseigenschaften von mindestens zwei elektromagnetische Wellen mit unterschiedlichen Wellenlängen auszuwerten, vorzugsweise deren Verhältnis auszuwerten.

In einer bevorzugten Ausführungsform ist die Auswerteeinheit ausgebildet, um anhand der Information über die festgestellte Oberflächenstruktur als Auswertesignal ein Informationssignal zur Beeinflussung und/oder Steuerung des Kraftfahrzeug-Insassenschutzsystems zu erzeugen.

Vorzugsweise weist eine Steuereinheit des Insassenschutzsystems eine Vergleichseinheit auf, die das Auswertesignal mit einem Schwellwert vergleicht, wobei die Steuereinheit ausgebildet ist, um bei Überschreiten des Schwellwertes durch das Signal mindestens eine Sicherheitseinrichtung auszulösen.

In einer besonders bevorzugten Ausführungsform ist eine Steuereinheit des Insassenschutzsystems ausgebildet, um abhängig vom Auswertesignal einen Schwellwert zum Aktivieren einer Sicherheitseinrichtung zu verändern. Beispielsweise kann der Schwellwert zum Auslösen eines Airbags abgesenkt werden, wenn von der erfindungsgemässen Vorrichtung als Hindernis ein Betonblock detektiert wird.

Insbesondere wird die Vorrichtung in einem Pre-Crash-System, einem cV-System, einem ADC-System, einem Hindernis- und/oder Glatteis-Warnsystem und/oder einem Fahrbahnbeschaffenheits-Erkennungssystem eingesetzt.

Ferner kann der Empfänger ausgebildet sein, um seine Empfangscharakteristik gesteuert von der Auswerteeinheit zu verändern. Beispielsweise kann er derart angesteuert werden, dass eine Empfangsoptik des Empfängers auf unterschiedliche Polarisationsebenen eingestellt wird. Somit kann das Reflexionsverhalten eines Hindernisses mit unterschiedlichen Polarisationsebenen überprüft werden, wodurch sich mehr Informationen über die Beschaffenheit des Hindernisses ermitteln lassen.

Die Signalquelle ist vorzugsweise ausgebildet, um mindestens eine linear, zirkular und/oder elliptisch polarisierte elektromagnetische Welle, insbesondere mit einer Wellenlänge im Bereich von sichtbarem Licht zu erzeugen. Dadurch ist es beispielsweise möglich Laserstrahlen mit unterschiedlichen Polarisationrichtungen auszusenden und deren möglicherweise unterschiedliche Reflexion am Hindernis auszuwerten. Es ist auch möglich, eine unpolarisierte elektromagnetische Welle auszusenden und deren Reflexion am Hindernis hinsichtlich der Polarisationseigenschaften zu analysieren, insbesondere bezüglich der in der reflektierten Welle enthaltenen Polarisationsanteile und -richtungen und die so gewonnene Information mit gespeicherten Informationen zu Polarisationen reflektierter Wellen an bestimmten Materialien wie Beton, Holz, Metall, Pappe oder dergleichen zu vergleichen.

Ferner betrifft die Erfindung ein Verfahren zur Objekterkennung für ein Kraftfahrzeug-Insassenschutzsystem, bei dem mindestens eine elektromagnetische Welle erzeugt und ausgesendet und die von einem Hindernis reflektierte mindestens eine elektromagnetische Welle empfangen wird. Erfindungsgemäss wird die Polarisation der vom Hindernis reflektierten und empfangenen mindestens einen elektromagnetischen Welle ausgewertet und mindestens ein Auswertesignal erzeugt, insbesondere um zusätzliche Informationen über das Hindernis ausser der Relativgeschwindigkeit und den Abstand zum Hindernis zu erhalten.

Dabei wird der Drehwinkel der Polarisation zwischen der vom Hindernis reflektierten und empfangenen und gesendeten mindestens einen elektromagnetischen Welle festgestellt.

Ausserdem kann die Polarisationsart der vom Hindernis reflektierten und empfangenen mindestens einen elektromagnetischen Welle festgestellt werden.

Zur weiteren Verbesserung der Auswertung kann die Wellenlänge der vom Hindernis reflektierten und empfangenen mindestens einen elektromagnetischen Welle festgestellt werden.

Vorzugsweise wird die Polarisation, insbesondere der Polarisationswinkel, die Polarisationsebene und/oder die Polarisationsart der erzeugten mindestens einen elektromagnetischen Welle verändert, insbesondere werden zwei oder mehr elektromagnetische Wellen mit unterschiedlichen Polarisationen ausgesendet, um ausreichend viele Informationen zur Feststellung der Beschaffenheit des Hindernisses zu erhalten.

Weiterhin kann die Wellenlänge der erzeugten mindestens einen elektromagnetischen Welle verändert werden, insbesondere können zwei oder mehr elektromagnetische Wellen mit unterschiedlichen Wellenlängen ausgesendet.

Anhand der ausgewerteten Polarisation, insbesondere des Polarisationswinkels, der Polarisationsebene und/oder der Polarisationsart und/oder Wellenlänge kann eine Oberflächenstruktur des Hindernisses feststellt werden.

Insbesondere wird anhand der Information über die festgestellte Oberflächenstruktur das Kraftfahrzeug-Insassenschutzsystem gesteuert.

Für eine weitere Verbesserung der Genauigkeit kann die Sendecharakteristik beim Senden und/oder die Empfangscharakteristik beim Empfangen der vom Hindernis reflektierten mindestens einen elektromagnetischen Welle verändert werden.

Typischerweise wird mindestens eine linear, zirkular und/oder elliptisch polarisierte elektromagnetische Welle, insbesondere mit einer Wellenlänge im Bereich von sichtbarem Licht erzeugt.

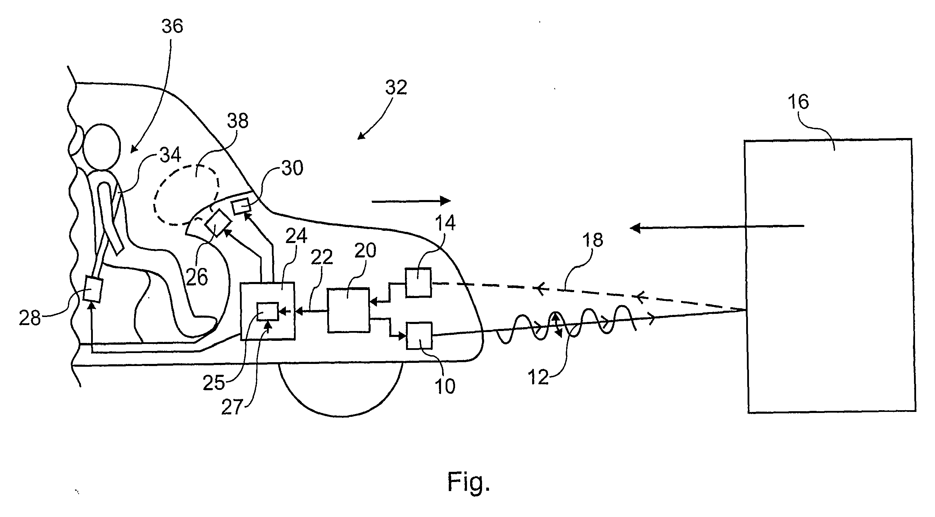

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel.

In der Beschreibung, in den Ansprüchen, in der Zusammenfassung und in der Zeichnung werden die in der hinten angeführten Liste der Bezugszeichen verwendeten Begriffe und zugeordneten Bezugszeichen verwendet.

Die einzige Fig. zeigt einen Personenkraftwagen (PKW) 32 mit einem Fahrzeuginsassen 36, der bei einem Crash oder Unfall mit einem Sicherheitsgurt 34 und einem Airbag 38 geschützt wird. Der Airbag 38 wird von einem Airbagsteuersystem (umfassend einen Gasgenerator) 26 im Falle eines Crashes gezündet bzw. aktiviert und ist im aufgeblasenen Zustand gestrichelt dargestellt. Der Sicherheitsgurt 34 wird von einem Gurtstraffer 28 kontrolliert, der im Falle eines Crashes den. Sicherheitsgurt 34 strafft. Zur Sicherheit des Fahrzeuginsassen ist ggf. ferner eine Hinderniswarnanzeige 30 im Bereich des Armaturenbretts des PKW 32 vorgesehen, die akustisch und optisch bei einem sich nähernden Hindernis oder einer drohenden Gefahrensituation warnt.

Airbagsteuersystem 26, Gurtstraffer 28 und Hinderniswarnanzeige 38 sind Teil einer Kraftfahrzeug-Sicherheitseinrichtung und werden von einer Steuereinheit der Kraftfahrzeug-Sicherheitseinrichtung 24 gesteuert. Die Steuereinheit 24 verarbeitet hierzu Eingangssignale von Sensoren, wie beispielsweise von Geschwindigkeits- und/oder Beschleunigungssensoren und/oder Signale von Fahrzeuginformationsbussen, wie z.B. einem CAN-Bus, und von einem Hindernissensor, der im Folgenden genauer beschrieben wird.

Der Hindernissensor umfasst im Wesentlichen einen Laser 10 als eine Signalquelle, die einen Laserstrahl 14 in Fahrtrichtung des PKWs 32 erzeugt, eine Empfangsdiode mit vorgeschaltetem Polarisationsfilter 14 als Empfänger für den an einem Hindernis 16 reflektierten Laserstrahl 18 und einen Auswerterechner 20 zum Steuern des Lasers 10 und Auswerten von Ausgangssignalen der Empfangsdiode mit vorgeschaltetem Polarisationsfilter 14.

Der Laser 10 erzeugt einen im Wesentlichen monochromatischen und linear polarisierten Laserstrahl. Abhängig von der Beschaffenheit des Hindernisses 16 wird die Polarisation des Laserstrahls 12 bei einer Reflexion um einen bestimmten Winkel gedreht. Die Polarisationsebene des reflektierten Laserstrahls 18 weist daher in der Regel einen anderen Winkel als die Polarisationsebene des gesendeten Laserstrahls 12 auf. Diese Drehung wird durch die Empfangsdiode mit vorgeschaltetem Polarisationsfilter 14 detektiert, d.h. es wird ein entsprechendes Ausgangssignal erzeugt, das vom Auswerterechner 20 verarbeitet wird.

Der Auswerterechner 20 wiederum erzeugt ein Auswertesignal 22 mit dem Ergebnis der Auswertung. Das Auswertesignal 22 wird an die Steuereinheit 24 als Sensorsignal übertragen. In der Steuereinheit 24 vergleicht eine Vergleichsschaltung 25 das empfangene Auswertesignal 22 mit einem vorgegebenen Schwellwert 27 oder einer gespeicherten Information, die je nach Art und Umfang vorzugsweise in einem ein- oder mehrdimensionalen Kennlinienfeld hinterlegt ist. Ein derartiges Kennlinienfeld kann z.B. durch spezielle Flächensensoren erzeugt werden, die zum Abtasten der Umgebung im Frontbereich des PKW dienen.

Das Auswertesignal dient nicht zur direkten Aktivierung von Sicherheitseinrichtungen wie dem Airbagsteuersystem bzw. Gasgenerator 26 und dem Gurtstraffer 28, sondern als ein sogenanntes Freigabe- oder Informationssignal für die Steuereinheit 24, damit von dieser die Einleitung/Aktivierung einer Zündung des Airbags 38 und/oder Gurtstraffers 28 erfolgen kann.

Es ist jedoch nicht ausgeschlossen, sondern von der vorliegenden Erfindung umfasst, dass, sofern als Auswertesignal 22 ein sogenanntes Freigabesignal an die Steuereinheit 24 übertragen wird, dieses dann beispielsweise als Plausibilisierungssignal für die Steuereinheit 24 (oder beispielsweise für ein Airbagsteuergerät) für die Kraftfahrzeug-Sicherheitseinrichtung dient, damit diese anhand der von ihr selbst getroffenen Auslöseentscheidung diese Entscheidung mittels einer "UND"-Verknüpfung mit dem Auswertesignal 22 plausibilisieren kann.

Sofern als Auswertesignal 22 ein sogenanntes Informationssignal oder Steuersignal gesendet wird, dann kann dieses beispielsweise dazu dienen, die in der Steuereinheit 24 vorgesehenen Schwellwerte 27 bzw. Auslöseschwellen entsprechend zu verändern oder der zu erwartenden Situation anzupassen. Konkret kann der Schwellwert 27 durch das Auswertesignal 22 beeinflusst, d.h. an die Art des Hindernisse 16 angepasst werden.

Das Auswertesignal 24 kann schliesslich auch direkt bestimmte Sicherheitseinrichtungen des Kraftfahrzeug-Insassenschutzsystems ansteuern, wie beispielsweise ein Warnsignallampenansteuerung oder die Hinderniswarnanzeige 30. In diesem Fall erfolgt die Signalverarbeitung oder Signalvorverarbeitung incl. Schwellenvergleich bzw. Mustervergleich (bei Einbeziehung eines Kennlinienfeldes) vorzugsweise bereits im Auswerterechner 20.

Überschreitet beim dargestellten Ausführungsbeispiel nun der Pegel des Auswertesignals 22 den vorgegebenen Schwellwert 27 oder lässt sich anhand eines Vergleichs mit den gespeicherten Informationen des ein- oder mehrdimensionalen Kennlinienfeldes auf eine sicherheitskritische Situation schliessen, aktiviert die Steuereinheit entsprechende Sicherheitseinrichtungen im PKW 32 oder generiert Steuer- und/oder Freigabesignale für die Sicherheitseinrichtungen. Dies kann beispielsweise die Aktivierung der Hinderniswarnanzeige 30, oder falls ein bestimmter minimaler Abstand zwischen PKW 32 und Hindernis 16 bereits unterschritten ist und ein Crash erfolgt, die Freigabe zur Aktivierung und/oder Anpassung der Auslöseschwelle des Steuergerätes zur Auslösung des Airbags 38 und des Gurtstraffers 28 sein.

Wesentlich ist hier, dass die durch Auswertung der Polarisation des reflektierten Laserstrahls 18 gewonnene Information für ein Sicherheitssystem in einem Kraftfahrzeug beispielsweise hinsichtlich der Art und Beschaffenheit des Hindernisses Kraftfahrzeug-Insassenschutzsysteme bezüglich von Sicherheitskriterien weiter verbessern kann.

### Bezugszeichen

- 10: Laser (Signalquelle)
- 12: Laserstrahl
- 14: Empfangsdiode mit vorgeschaltetem Polarisationsfilter
- 16: Hindernis
- 18: reflektierter Laserstrahl
- 20: Auswerterechner
- 22: Auswertesignal
- 24: Steuereinheit der Kraftfahrzeug-Sicherheitseinrichtung
- 25: Vergleichsschaltung
- 26: Airbagsteuersystem
- 27: Schwellwert
- 28: Gurtstraffer
- 30: Hinderniswarnanzeige
- 32: Personenkraftwagen
- 34: Sicherheitsgurt
- 36: Fahrzeuginsasse
- 38: Airbag

## Patentansprüche

1. Vorrichtung zur Objekterkennung für ein Kraftfahrzeug-Insassenschutzsystem mit
einer Signalquelle (10), die zum Erzeugen mindestens einer elektromagnetischen Welle (12) ausgebildet ist, und einem Empfänger (14) für die von einem Hindernis (16) reflektierte mindestens eine elektromagnetische Welle (18), wobei eine Auswerteeinheit (20) vorgesehen ist, die zum Auswerten der Polarisation der vom Hindernis (16) reflektierten und vom Empfänger (14) empfangenen mindestens einen elektromagnetischen Welle (18) und zum Erzeugen mindestens eines Auswertesignals (22) ausgebildet ist, **dadurch gekennzeichnet, dass**
die Auswerteeinheit (20) ausgebildet ist, um den Drehwinkel der Polarisation zwischen der vom Hindernis (16) reflektierten und vom Empfänger (14) empfangenen und der gesendeten mindestens einen elektromagnetischen Welle (18) festzustellen.

2. Vorrichtung nach Anspruch 1,**dadurch gekennzeichnet, dass** die Auswerteeinheit (20) ausgebildet ist, um die Polarisationsart der vom Hindernis (16) reflektierten und vom Empfänger (14) empfangenen mindestens einen elektromagnetischen Welle (18) festzustellen.

3. Vorrichtung nach Anspruch 1 oder 2, **dadurch gekennzeichnet, dass** die Auswerteeinheit (20) ausgebildet ist, um die Wellenlänge der vom Hindernis (16) reflektierten und vom Empfänger (14) empfangenen mindestens einen elektromagnetischen Welle (18) festzustellen.

4. Vorrichtung nach einem der Ansprüche 1 bis 3,
**dadurch gekennzeichnet, dass**
die Signalquelle (10) ausgebildet ist, um die Polarisation, insbesondere den Polarisationswinkel, die Polarisationsebene und/oder die Polarisationsart der erzeugten mindestens einen elektromagnetischen Welle (12) zu verändern, insbesondere mindestens zwei unterschiedlich polarisierte elektromagnetische Wellen (12) zu erzeugen.

5. Vorrichtung nach einem der Ansprüche 1 bis4,
**dadurch gekennzeichnet, dass**
die Signalquelle (10) ausgebildet ist, um die Wellenlänge der erzeugten mindestens einen elektromagnetischen Welle (12) zu verändern, insbesondere mindestens zwei elektromagnetische Wellen (12) mit unterschiedlichen Wellenlängen zu erzeugen.

6. Vorrichtung nach einem der vorhergehenden Ansprüche,
**dadurch gekennzeichnet, dass**
die Auswerteeinheit (20) ausgebildet ist, um anhand der ausgewerteten Polarisation, insbesondere des Polarisationswinkels, der Polarisationsebene und/oder der Polarisationsart und/oder Wellenlänge eine Oberflächenstruktur des Hindernisses festzustellen, insbesondere die Polarisationseigenschaften von mindestens zwei elektromagnetische Wellen mit unterschiedlichen Wellenlängen auszuwerten, vorzugsweise deren Verhältnis auszuwerten.

7. Vorrichtung nach Anspruch 6, **dadurch gekennzeichnet, dass** die Auswerteeinheit (20) ausgebildet ist, um anhand der Information über die festgestellte Oberflächenstruktur als Auswertesignal (22) ein Informationssignal zur Beeinflussung und/oder Steuerung des Kraftfahrzeug-Insassenschutzsystems (24, 26, 28, 30) zu erzeugen.

8. Vorrichtung nach Anspruch7, **dadurch gekennzeichnet, dass** eine Steuereinheit (24) des Insassenschutzsystems eine Vergleichseinheit (25) aufweist, die das Auswertesignal (22) mit einem Schwellwert (27) vergleicht, wobei die Steuereinheit (24) ausgebildet ist, um bei Überschreiten des Schwellwertes (27) durch das Signal (22) mindestens eine Sicherheitseinrichtung (26, 28, 30) auszulösen.

9. Vorrichtung nach Anspruch 7 oder 8, **dadurch gekennzeichnet, dass** eine Steuereinheit (24) des Insassenschutzsystems ausgebildet ist, um abhängig vom Auswertesignal (22) einen Schwellwert (27) zum Aktivieren einer Sicherheitseinrichtung (26, 28) zu verändern.

10. Vorrichtung nach Anspruch 8 oder 9,
**dadurch gekennzeichnet, dass**
sie in einem Pre-Crash-System, einem cV-System, einem ADC-System, einem Hindernis-und/oder Glatteis-Warnsystem und/oder einem Fahrbahnbeschaffenheits-Erkennungssystem eingesetzt ist.

11. Vorrichtung nach einem der vorhergehenden Ansprüche,
**dadurch gekennzeichnet, dass**
der Empfänger (14) ausgebildet ist, um seine Empfangscharakteristik gesteuert von der Auswerteeinheit (20) zu verändern.

12. Vorrichtung nach einem der vorhergehenden Ansprüche,
**dadurch gekennzeichnet, dass**
die Signalquelle (10) ausgebildet ist, um mindestens eine linear, zirkular und/oder elliptisch polarisierte elektromagnetische Welle, insbesondere mit einer Wellenlänge im Bereich von sichtbarem Licht zu erzeugen.

13. Verfahren zur Objekterkennung für ein Kraftfahrzeug-Insassenschutzsystem, bei dem
mindestens eine elektromagnetische Welle (12) erzeugt und ausgesendet und die von einem Hindernis (16) reflektierte mindestens eine elektromagnetische Welle (18) empfangen wird, wobei die Polarisation der vom Hindernis (16) reflektierten und empfangenen mindestens einen elektromagnetischen Welle (18) ausgewertet und mindestens ein Auswertesignal erzeugt wird, **dadurch gekennzeichnet, dass**
der Drehwinkel zwischen der Polarisation der vom Hindernis (16) reflektierten und empfangenen und gesendeten mindestens einen elektromagnetischen Welle (18) festgestellt wird.

14. Verfahren nach Anspruch 13, **dadurch gekennzeichnet, dass** die Polarisationsart der vom Hindernis (16) reflektierten und empfangenen mindestens einen elektromagnetischen Welle (18) festgestellt wird.

15. Verfahren nach Anspruch 13 oder 14,
**dadurch gekennzeichnet, dass**
die Wellenlänge der vom Hindernis (16) reflektierten und empfangenen mindestens einen elektromagnetischen Welle (18) festgestellt wird.

16. Verfahren nach einem der Ansprüche 13 bis 15,
**dadurch gekennzeichnet, dass**
die Polarisation, insbesondere der Polarisationwinkel, die Polarisationsebene und/oder die Polarisationart der erzeugten mindestens einen elektromagnetischen Welle (12) verändert wird, insbesondere dass zwei oder mehr elektromagnetische Wellen (12) mit unterschiedlichen Polarisationen ausgesendet werden.

17. Verfahren nach einem der Ansprüche 13 bis 16,
**dadurch gekennzeichnet, dass**
die Wellenlänge der erzeugten mindestens einen elektromagnetischen Welle (12) verändert wird, insbesondere dass zwei oder mehr elektromagnetische Wellen (12) mit unterschiedlichen Wellenlängen ausgesendet werden.

18. Verfahren nach einem der Ansprüche 13 bis 17,
**dadurch gekennzeichnet, dass**
anhand der ausgewerteten Polarisation, insbesondere des Polarisationswinkels, der Polarisationsebene und/oder der Polarisationsart und/oder Wellenlänge eine Oberflächenstruktur des Hindernisses feststellt wird.

19. Verfahren nach Anspruch 18, **dadurch gekennzeichnet, dass** anhand der Information über die festgestellte Oberflächenstruktur das Kraftfahrzeug-Insassenschutzsystem (24, 26, 28, 30) gesteuert wird.

20. Verfahren nach einem der Ansprüche 13 bis 19, **dadurch gekennzeichnet, dass** die Sendecharakteristik beim Senden und/oder die Empfangscharakteristik beim Empfangen der vom Hindernis (16) reflektierten mindestens einen elektromagnetischen Welle (18) verändert wird.

## Claims

1. A device for detecting objects for a motor vehicle passenger protection system with
a signal source (10), which is designed for the generation of at least one electromagnetic wave (12), and a receiver (14) for the at least one electromagnetic wave (18) which is reflected by an obstacle (16), whereby an evaluation unit (20) is provided which is designed for the evaluation of the polarisation of the at least one electromagnetic wave (18) which is reflected by the obstacle (16) and which is received by the receiver (14), and for the generation of at least one evaluation signal (22), **characterized in that** the evaluation unit (20) is designed in order to determine the angle of rotation of the polarisation between the at least one electromagnetic wave (18) which is reflected by the obstacle (16) and received by the receiver (14) and that which is transmitted.

2. A device according to claim 1, **characterized in that** the evaluation unit (20) is designed in order to determine the type of polarisation of the at least one electromagnetic wave (18) which is reflected by the obstacle (16) and which is received by the receiver (14).

3. A device according to either of claims 1 or 2, **characterized in that** the evaluation unit (20) is designed in order to determine the wavelength of the at least one electromagnetic wave (18) which is reflected by the obstacle (16) and which is received by the receiver (14).

4. A device according to any one of claims 1 to 3, **characterized in that** the signal source (10) is designed in order to modify the polarisation, in particular, the polarisation angle, the polarisation level and/or the polarisation type, of the at least one electromagnetic wave (12) which is generated, in particular, to generate at least two differently polarised electromagnetic waves (12).

5. A device according to any one of claims 1 to 4, **characterized in that** the signal source (10) is designed in order to modify the wavelength of the at least one electromagnetic wave (12) which is generated, in particular, to generate at least two electromagnetic waves (12) with different wavelengths.

6. A device according to any one of the preceding claims, **characterized in that** the evaluation unit (20) is designed in order to determine, based on the evaluated polarisation, in particular the polarisation angle, the polarisation level and/or the polarisation type and/or the wavelength, a surface structure of the obstacle, in particular, to evaluate the polarisation properties of at least two electromagnetic waves with different wavelengths, and preferably, to evaluate their ratio.

7. A device according to claim 6, **characterized in that** the evaluation unit (20) is designed in order to generate, based on the information regarding the determined surface structure, an information signal as an evaluation signal (22) in order to influence and/or control the motor vehicle passenger protection system (24, 26, 28, 30).

8. A device according to claim 7, **characterized in that** a control unit (24) of the passenger protection system comprises a comparison unit (25), which compares the evaluation signal (22) with a threshold value (27), whereby the control unit (24) is designed in order to trigger at least one safety device (26, 28, 30) if the threshold value (27) is exceeded by the signal (22).

9. A device according to either of claims 7 or 8, **characterized in that** a control unit (24) of the passenger protection system is designed in order to modify, depending on the evaluation signal (22), a threshold value (27)for activating a safety device (26, 28).

10. A device according to either of claims 8 or 9, **characterized in that** it is used in a pre-cash system, a CV system, an ADC system, an obstacle and/or black ice warning system and/or a road quality detection system.

11. A device according to any one of the preceding claims, **characterized in that** the receiver (14) is designed in order to modify its receiving characteristics, controlled by the evaluation unit (20).

12. A device according to any one of the preceding claims, **characterized in that** the signal source (10) is designed in order to generate at least one linearly, circularly and/or elliptically polarised electromagnetic wave, in particular with a wavelength within the visible light range.

13. A method for detecting objects for a motor vehicle passenger protection system, in which at least one electromagnetic wave (12) is generated and transmitted, and the at least one electromagnetic wave (18) which is reflected by an obstacle (16) is received, whereby the polarisation of the at least one electromagnetic wave (18) which is reflected by the obstacle (16) and which is received is evaluated and at least one evaluation signal is generated, **characterized in that**
the angle of rotation between the polarisation of the at least one electromagnetic wave (18) which is reflected by the obstacle (16), and which is received and transmitted, is determined.

14. A method according to claim 13, **characterized in that** the polarisation type of the at least one electromagnetic wave (18) which is reflected by the obstacle (16) and which is received is determined

15. A method according to either of claims 13 or 14, **characterized in that** the wavelength of the at least one electromagnetic wave (18) which is reflected by the obstacle (16) and which is received is determined.

16. A method according to any one of claims 13 to 15, **characterized in that** the polarisation, in particular the polarisation angle, the polarisation level and/or the polarisation type, of the at least one electromagnetic wave (12) which is generated is modified, in particular, that two or more electromagnetic waves (12) with different polarisations are transmitted.

17. A method according to any one of claims 13 to 16, **characterized in that** the wavelength of the at least one electromagnetic wave (12) which is generated is modified, in particular, that two or more electromagnetic waves (12) with different wavelengths are transmitted.

18. A method according to any one of claims 13 to 17, **characterized in that** a surface structure of the obstacle is determined based on the evaluated polarisation, in particular the polarisation angle, the polarisation level and/or the polarisation type and/or the wavelength.

19. A method according to claim 18, **characterized in that** the motor vehicle passenger protection system (24, 26, 28, 30) is controlled based on the information regarding the determined surface structure.

20. A method according to any one of claims 13 to 19, **characterized in that** the transmission characteristics when transmitting and/or the receiving characteristics when receiving the at least one electromagnetic wave (18) which is reflected by the obstacle (16) are modified.

## Revendications

1. Dispositif de détection d'objet pour un système de protection d'occupants de véhicule automobile, avec
une source de signal (10) qui est constituée pour la production d'au moins une onde électromagnétique (12), et avec un récepteur (14) pour l'onde électromagnétique (18), au moins au nombre de un, réfléchie par un obstacle (16), une unité d'analyse (20) étant prévue, qui est constituée pour l'analyse de la polarisation de l'onde électromagnétique (18), au moins au nombre de un, réfléchie par l'obstacle (16) et reçue par le récepteur (14), et pour la production d'au moins un signal d'analyse (22), **caractérisé en ce que**
l'unité d'analyse (20) est constituée pour déterminer l'angle de rotation de la polarisation entre l'onde électromagnétique (18), au moins au nombre de un, réfléchie par l'obstacle (16) et reçue par le récepteur (14) et l'onde électromagnétique (18), au moins au nombre de un, émise.

2. Dispositif selon la revendication 1, **caractérisé en ce que** l'unité d'analyse (20) est constituée pour déterminer le type de polarisation de l'onde électromagnétique (18), au moins au nombre de un, réfléchie par l'obstacle (16) et reçue par le récepteur (14).

3. Dispositif selon la revendication 1 ou 2, **caractérisé en ce que** l'unité d'analyse (20) est constituée pour déterminer la longueur d'onde de l'onde électromagnétique (18), au moins au nombre de un, réfléchie par l'obstacle (16) et reçue par le récepteur (14).

4. Dispositif selon une des revendications 1 à 3, **caractérisé en ce que** la source de signal (10) est constituée pour faire varier la polarisation, en particulier l'angle de polarisation, le plan de polarisation et/ou le type de polarisation de l'onde électromagnétique (12), au moins au nombre de un, produite, en particulier pour produire au moins deux ondes électromagnétiques (12) polarisées de façon différente.

5. Dispositif selon une des revendications 1 à 4, **caractérisé en ce que**
la source de signal (10) est constituée pour faire varier la longueur d'onde de l'onde électromagnétique (12), au moins au nombre de un, produite, en particulier pour produire au moins deux ondes électromagnétiques (12) de longueurs d'ondes différentes.

6. Dispositif selon une des revendications précédentes, **caractérisé en ce que**
l'unité d'analyse (20) est constituée pour déterminer, à l'aide de la polarisation analysée, en particulier de l'angle de polarisation, du plan de polarisation et/ou du type de polarisation et/ou de la longueur d'onde, une structure superficielle de l'obstacle, en particulier pour analyser les caractéristiques de polarisation d'au moins deux ondes électromagnétiques ayant des longueurs d'ondes différentes, en particulier pour analyser leur rapport.

7. Dispositif selon la revendication 6, **caractérisé en ce que** l'unité d'analyse (20) est constituée pour produire, à l'aide de l'information sur la structure superficielle déterminée, en tant que signal d'analyse (22), un signal d'information pour influencer et/ou commander le système de protection d'occupants du véhicule automobile (24, 26, 28, 30).

8. Dispositif selon la revendication 7, **caractérisé en ce qu'**une unité de commande (24) du système de protection d'occupants présente une unité de comparaison (25) qui compare le signal d'analyse (22) à une valeur de seuil (27), l'unité de commande (24) étant constituée pour déclencher au moins un équipement de sécurité (26, 28, 30) en cas de dépassement de la valeur de seuil (27) par le signal (22).

9. Dispositif selon la revendication 7 ou 8,
**caractérisé en ce qu'**une unité de commande (24) du système de protection d'occupants est constituée pour faire varier, en fonction du signal d'analyse (22), une valeur de seuil (27) pour activer un équipement de sécurité (26, 28).

10. Dispositif selon la revendication 8 ou 9,
**caractérisé en ce que**
le dispositif est utilisé dans un système pre-crash, un système cV, un système ADC, un système d'alarme d'obstacle et/ou de verglas et/ou dans un système de détection de l'état de la chaussée.

11. Dispositif selon une des revendications précédentes,
**caractérisé en ce que**
le récepteur (14) est constitué pour faire varier sa caractéristique de réception sous la commande de l'unité d'analyse (20).

12. Dispositif selon une des revendications précédentes,
**caractérisé en ce que**
la source de signal (10) est constituée pour produire au moins une onde électromagnétique polarisée de façon linéaire, circulaire et/ou elliptique, en particulier avec une longueur d'onde dans la plage de la lumière visible.

13. Procédé de détection d'objet pour un système de protection d'occupants de véhicule automobile, dans lequel
au moins une onde électromagnétique (12) est produite et émise, et l'onde électromagnétique (18), au moins au nombre de un, réfléchie par un obstacle (16) est reçue, la polarisation de l'onde électromagnétique (18), au moins au nombre de un, réfléchie par l'obstacle (16) et reçue étant analysée, et au moins un signal d'analyse étant produit, **caractérisé en ce que**
l'angle de rotation entre la polarisation de l'onde électromagnétique (18), au moins au nombre de un, réfléchie par l'obstacle (16) et reçue et de l'onde électromagnétique, au moins au nombre de un, et émise est déterminé.

14. Procédé selon la revendication 13, **caractérisé en ce que**
le type de polarisation de l'onde électromagnétique (18), au moins au nombre de un, réfléchie par l'obstacle (16) et reçue est déterminé.

15. Procédé selon la revendication 13 ou 14,
**caractérisé en ce que**
la longueur d'onde de l'onde électromagnétique (18), au moins au nombre de un, réfléchie par l'obstacle (16) et reçue est déterminée.

16. Procédé selon une des revendications 13 à 15,
**caractérisé en ce que**
la polarisation, en particulier l'angle de polarisation, le plan de polarisation et/ou le type de polarisation de l'onde électromagnétique (12), au moins au nombre de un, produite est modifiée, en particulier **en ce que** deux ondes électromagnétiques (12) ou plus ayant des polarisations différentes sont émises.

17. Procédé selon une des revendications 13 à 16,
**caractérisé en ce que**
la longueur d'onde de l'onde électromagnétique (12), au moins au nombre de un, produite est modifiée, en particulier **en ce que** deux ondes électromagnétiques (12) ou plus ayant des polarisations différentes sont émises.

18. Procédé selon une des revendications 13 à 17,
**caractérisé en ce que**,
à l'aide de la polarisation analysée, en particulier de l'angle de polarisation, du plan de polarisation et/ou du type de polarisation et/ou de la longueur d'onde, une structure superficielle de l'obstacle est déterminée.

19. Procédé selon la revendication 18, **caractérisé en ce que** le système de protection d'occupants de véhicule automobile (24, 26, 28, 30) est commandé à l'aide de l'information sur la structure superficielle déterminée.

20. Procédé selon une des revendications 13 à 19,
**caractérisé en ce que** la caractéristique d'émission, lors de l'émission, et/ou la caractéristique de réception, lors de la réception, de l'onde électromagnétique (18), au moins au nombre de un, réfléchie par l'obstacle (16) est modifiée.
